# DEMANDE DE BREVET EUROPEEN

(11) **EP 0 748 717 A1**
(43) Date de publication de la demande: **18.12.1996**
(21) Numéro de dépôt: 96401164.7
(22) Date de dépôt: 30.05.1996
(51) Int. Cl.: B60N 3/10

(54) **Dispositif de rangement d'objets par exemple pour véhicule automobile**

(30) Priorité: 13.06.1995 FR 9507000
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR)
(74) Mandataire: Habasque, Etienne Joel Jean-François

(57) **Abrégé**

Ce dispositif de rangement d'objets, par exemple pour véhicule automobile, du type comportant un logement (3) muni d'une ouverture (4), est caractérisé en ce qu'il comporte en outre au moins un organe de maintien (5) des objets en position dans le logement muni d'empreintes (7,8,9,10) de réception des objets, réparties sur celui-ci et monté déplaçable dans le logement (3) devant l'ouverture (4) de celui-ci, pour permettre la mise en position d'au moins une empreinte déterminée de l'organe en regard de l'ouverture du logement.

## Description

La présente invention concerne un dispositif de rangement d'objets, par exemple pour véhicule automobile.

On connaît déjà dans l'état de la technique un certain nombre de dispositifs de rangement d'objets pour véhicules automobiles, qui comportent un logement muni d'une ouverture et qui adapté pour recevoir un ou plusieurs objets quelconques.

De tels dispositifs de rangement ont été développés pour recevoir par exemple des gobelets ou des récipients contenant des boissons qu'il est difficile de poser à l'intérieur d'un véhicule automobile.

Ces dispositifs ont alors pour fonction de maintenir ces objets en position à l'intérieur du véhicule.

Cependant, ces objets peuvent être de natures différentes et présenter des tailles et des formes différentes, ce qui rend l'utilisation de ces dispositifs de rangement relativement peu pratique.

En effet, ces dispositifs de rangement ne sont pas universels et sont en général adaptés à un récipient de forme et de taille particulières, de sorte qu'ils ne sont pas adaptés pour recevoir et maintenir des objets différents.

Le but de l'invention est donc de résoudre ces problèmes.

A cet effet, l'invention a pour objet un dispositif de rangement d'objets, par exemple pour véhicule automobile, du type comportant un logement muni d'une ouverture, caractérisé en ce qu'il comporte en outre au moins un organe de maintien des objets en position dans le logement muni d'empreintes de réception des objets, réparties sur celui-ci et monté déplaçable dans le logement devant l'ouverture de celui-ci, pour permettre la mise en position d'au moins une empreinte déterminée de l'organe en regard de l'ouverture du logement.

Avantageusement, les empreintes présentent des formes adaptées pour recevoir des objets de natures différentes.

L'invention sera mieux comprise à la lecture de la description qui va suivre, donnée uniquement à titre d'exemple et faite en se référant aux dessins annexés, sur lesquels :
- la Fig.1 représente une vue en coupe schématique d'un premier exemple de réalisation d'un dispositif de rangement d'objets selon l'invention;
- la Fig.2 représente une vue de dessus du dispositif de rangement d'objets représenté sur la figure 1;
- la Fig.3 représente une vue en coupe d'un second exemple de réalisation d'un dispositif de rangement d'objets selon l'invention;
- la Fig.4 représente une vue en coupe d'un troisième exemple de réalisation d'un dispositif de rangement d'objets selon l'invention;
- la Fig.5 représente une vue en coupe d'un quatrième exemple de réalisation d'un dispositif de rangement d'objets selon l'invention; et
- la Fig.6 représente une vue de dessus du dispositif de rangement d'objets représenté sur la figure 5.

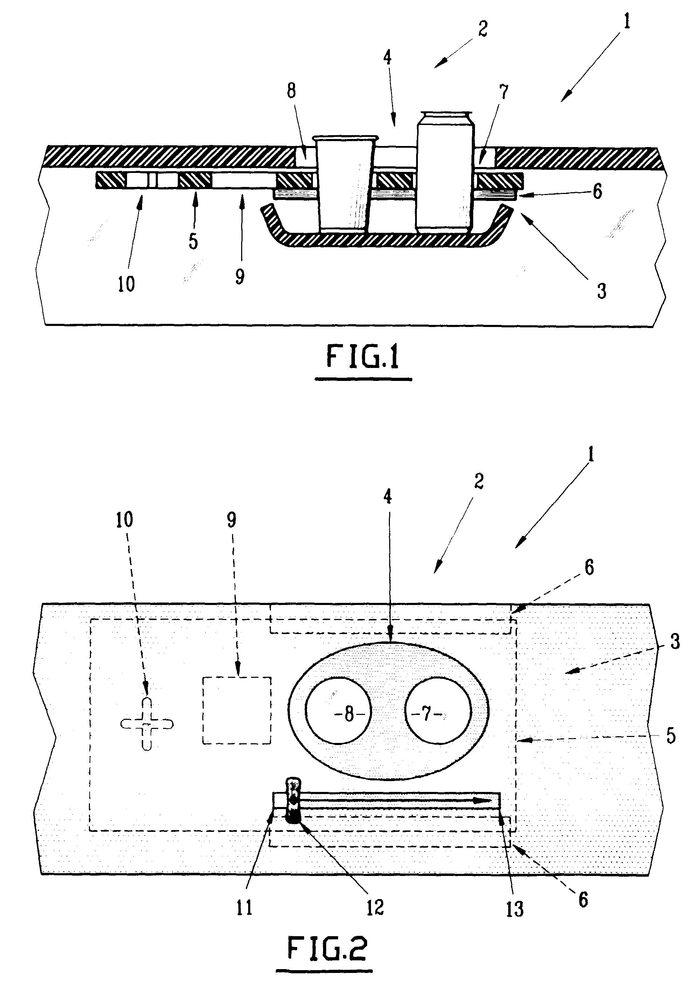

Ainsi qu'on peut le voir sur les figures 1 et 2, l'invention concerne un dispositif de rangement d'objets, par exemple pour véhicule automobile, prévu par exemple dans une pièce de structure désignée par la référence générale 1 de celui-ci.

Cette pièce de structure peut par exemple être la planche de bord ou autre du véhicule.

Le dispositif de rangement est désigné par la référence générale 2 sur ces figures 1 et 2 et comprend par exemple un logement désigné par la référence générale 3 muni d'une ouverture désignée par la référence générale 4.

Le dispositif de rangement comporte en outre au moins un organe 5 de maintien des objets en position dans le logement, muni d'empreintes de réception des objets réparties sur celui-ci, cet organe étant monté déplaçable dans le logement devant l'ouverture de celui-ci pour permettre la mise en position d'au moins une empreinte déterminée de l'organe en regard de l'ouverture du logement.

Dans l'exemple de réalisation représenté sur ces figures 1 et 2, cet organe 5 de maintien des objets en position se présente sous la forme d'un tiroir monté déplaçable dans des glissières de guidage 6 devant l'ouverture 4 du logement, ce tiroir comportant différentes empreintes, par exemple au nombre de quatre, désignées par les références 7,8,9 et 10, réparties sur ce tiroir de manière que l'une ou plusieurs de ces empreintes soient mises en regard de l'ouverture du logement par déplacement du tiroir à coulissement devant cette ouverture, dans le logement.

C'est ainsi par exemple que l'une, 7, de ces empreintes du tiroir est adaptée pour recevoir une boîte de boisson tandis qu'une autre empreinte par exemple 8, est adaptée pour recevoir un gobelet ou autre.

On conçoit alors que les empreintes peuvent présenter des formes adaptées pour recevoir des objets de natures différentes.

Par ailleurs, ce dispositif comporte également des moyens de manoeuvre de l'organe de maintien des objets, désignés par la référence générale 11 sur la figure 2, ces moyens de manoeuvre étant adaptés pour permettre le déplacement du tiroir par l'utilisateur par exemple.

Dans l'exemple de réalisation représenté sur cette figure 2, ces moyens de manoeuvre 11 comprennent un pion de manoeuvre 12 relié au tiroir 5 et déplaçable dans une lumière 13 ménagée à proximité de l'ouverture 4 du logement.

Bien entendu, d'autres modes de réalisation de ces moyens de manoeuvre peuvent être envisagés.

Ainsi, ces moyens de manoeuvre peuvent être formés par des parties en relief du tiroir, adaptées pour s'étendre dans l'ouverture du logement et permettant à l'utilisateur de déplacer celui-ci.

On conçoit alors que l'utilisateur peut déplacer le tiroir pour sélectionner l'une et/ou l'autre des empreintes de celui-ci.

Bien entendu, le dispositif de rangement d'objets selon l'invention peut présenter des formes différentes de celles représentées sur ces figures.

C'est ainsi par exemple que l'ouverture du logement et le tiroir peuvent présenter des formes diférentes de celles représentées.

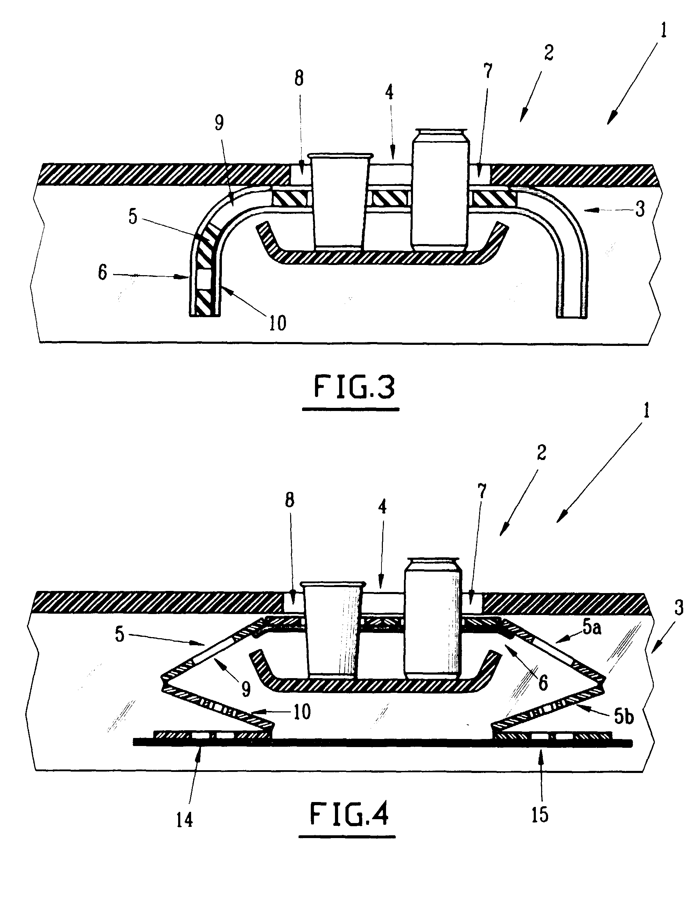

Ainsi par exemple, sur la figure 3, dans laquelle des numéros de référence identiques désignent des pièces identiques ou analogues à celles déjà décrites en regard des figures 1 et 2, l'organe de maintien 5 se présente sous la forme d'un tiroir souple toujours monté déplaçable dans les glissières 6 du dispositif de rangement. Cependant, ces glissières présentent des extrémités courbées permettant de réduire l'encombrement en largeur du dispositif.

Les moyens de manoeuvre de ce tiroir peuvent être analogues à ceux déjà décrits en regard de la figure 2.

Sur la figure 4, on a représenté encore un autre mode de réalisation d'un organe de maintien entrant dans la constitution d'un dispositif de rangement selon l'invention.

Dans cet exemple de réalisation également des numéros de référence identiques désignent des pièces identiques ou analogues à celles déjà décrites en regard des figures précédentes.

Dans cet exemple de réalisation, l'organe de maintien 5 se présente toujours sous la forme d'un tiroir monté déplaçable dans les glissières de guidage 6 du dispositif de rangement, ce tiroir se présentant par exemple sous la forme de plusieurs volets articulés les uns sur les autres, tels que par exemple des volets 5a et 5b, s'empilant et se désempilant respectivement, de et dans de première et de seconde zones de stockage de ces volets, désignées par les références 14 et 15 sur ces figures en fonction des déplacements de ce tiroir par l'utilisateur pour amener l'une et/ou l'autre des empreintes de ces volets en regard de l'ouverture du logement.

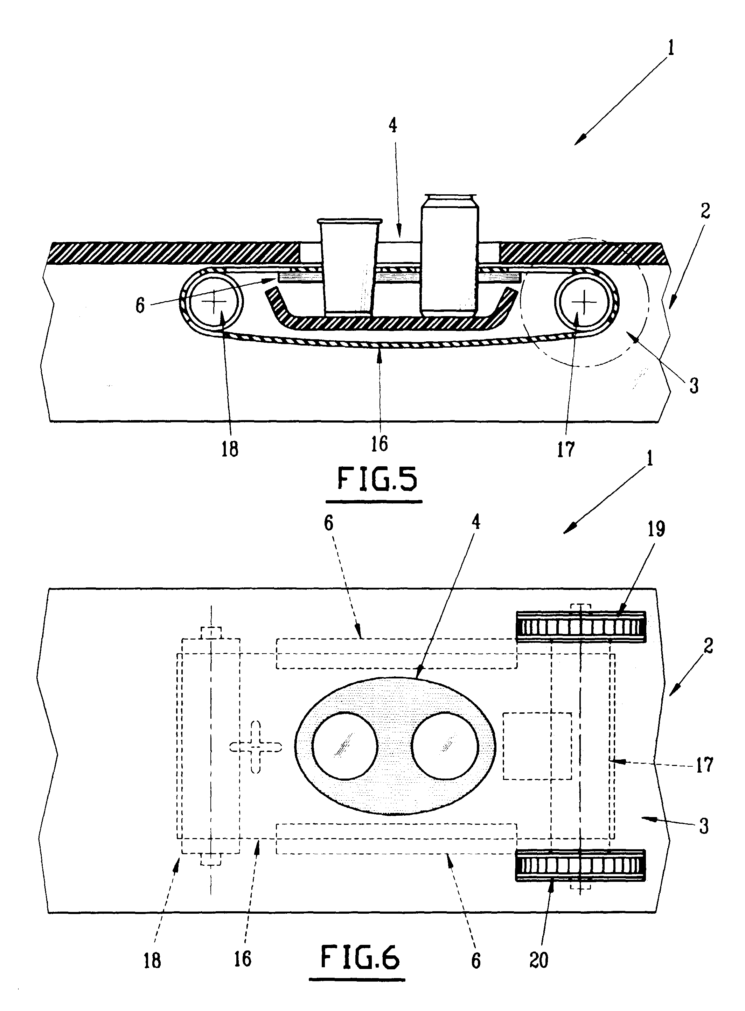

Sur les figures 5 et 6, on reconnaît le dispositif de rangement 2 comportant en outre un organe de maintien des objets déplaçable devant l'ouverture 4 du logement 3.

Dans l'exemple de réalisation représenté sur ces figures 5 et 6, l'organe de maintien des objets se présente sous la forme d'une bande sans fin 16 disposée autour de rouleaux de guidage 17 et 18 situés de part et d'autre de l'ouverture 4 du logement, cette bande passant dans les glissières de guidage 6 du dispositif de rangement.

L'un des rouleaux, par exemple 17, est associé à des moyens de manoeuvre, tels que des molettes 19 et 20 disposées de part et d'autre de ce rouleau et faisant saillie dans des lumières correspondantes situées à proximité de l'ouverture 4 du logement pour permettre le déplacement de l'organe de maintien par l'utilisateur afin de sélectionner l'une ou l'autre des empreintes de cette bande sans fin.

Il va de soi également que cette bande 16 peut par exemple comporter des perforations adaptées pour coopérer avec des tétons complémentaires du rouleau 17 pour assurer l'entraînement en rotation de cette bande par l'utilisateur lors de la manoeuvre des molettes 19,20 de déplacement de cette bande.

Il va de soi bien entendu que différents modes de réalisation de cette bande, des moyens de guidage et des moyens de manoeuvre de celle-ci peuvent être envisagés.

On conçoit alors que ce dispositif de rangement est extrêmement pratique dans la mesure où il permet à un utilisateur de l'adapter à un ou plusieurs objets qu'il souhaite ranger en plaçant l'une ou l'autre des empreintes de l'organe de maintien en regard de l'ouverture du logement.

Des objets de natures différentes peuvent ainsi être rangés et maintenus en position dans le dispositif.

## Revendications

1. Dispositif de rangement d'objets, par exemple pour véhicule automobile, du type comportant un logement (3) muni d'une ouverture (4), caractérisé en ce qu'il comporte en outre au moins un organe (5;16) de maintien des objets en position dans le logement, muni d'empreintes (7,8,9,10) de réception des objets réparties sur celui-ci et monté déplaçable dans le logement devant l'ouverture de celui-ci, pour permettre la mise en position d'au moins une empreinte déterminée de l'organe en regard de l'ouverture du logement.

2. Dispositif selon la revendication 1, caractérisé en ce que les empreintes (7,8,9,10) présentent des formes adaptées pour recevoir des objets de natures différentes.

3. Dispositif selon la revendication 2, caractérisé en ce qu'il comporte des moyens (11;19,20) de manoeuvre de l'organe de maintien des objets.

4. Dispositif selon l'une quelconque des revendications précédentes, caractérisé en ce que l'organe de maintien des objets se présente sous la forme d'un tiroir (5) déplaçable dans des glissières (6) du logement.

5. Dispositif selon la revendication 4, caractérisé en ce que le tiroir (5) est un tiroir souple et en ce que les extrémités des glissières (6) sont courbées.

6. Dispositif selon la revendication 4, caractérisé en ce que le tiroir comporte des volets (5a,5b) articulés les uns sur les autres.

7. Dispositif selon l'une quelconque des revendications 3 à 6, caractérisé en ce que les moyens de manoeuvre du tiroir comprennent un pion (12) de déplacement de celui-ci en saillie hors du logement.

8. Dispositif selon la revendication 7, caractérisé en ce que le pion fait saillie dans une lumière (13) ménagée dans le logement à proximité de l'ouverture de celui-ci.

9. Dispositif selon l'une quelconque des revendications 1 à 3, caractérisé en ce que l'organe (16) de maintien des objets se présente sous la forme d'une bande sans fin associée à des moyens de guidage (17,18).

10. Dispositif selon la revendication 9, caractérisé en ce que les moyens de guidage comprennent des rouleaux (17,18) disposés de part et d'autre de l'ouverture (4) du logement (3).

11. Dispositif selon la revendication 10, caractérisé en ce que les moyens de manoeuvre de cette bande sans fin comprennent au moins une molette (19,20) reliée à l'un des rouleaux (17) et faisant saillie dans des lumières du logement ménagées à proximité de l'ouverture de celui-ci.
